# EUROPÄISCHE PATENTSCHRIFT

(11) **EP 3 969 848 B1**
(45) Veröffentlichungstag und Bekanntmachung des Hinweises auf die Patenterteilung: **09.08.2023**
(21) Anmeldenummer: 20725162.0
(22) Anmeldetag: 11.05.2020
(51) Int. Cl.: G01D 3/08

(54) **ROTORPOSITIONSSENSOR UND LENKSYSTEM FÜR EIN KRAFTFAHRZEUG MIT EINEM ROTORPOSITIONSSENSOR**
ROTOR POSITION SENSOR AND STEERING SYSTEM FOR A MOTOR VEHICLE HAVING A ROTOR POSITION SENSOR
CAPTEUR DE POSITION DE ROTOR ET SYSTÈME DE DIRECTION POUR UN VÉHICULE À MOTEUR POURVU D'UN CAPTEUR DE POSITION DE ROTOR

(30) Priorität: 15.05.2019 DE 102019207070
(43) Veröffentlichungstag der Anmeldung: 23.03.2022
(73) Patentinhaber: thyssenkrupp Presta AG, 9492 Eschen (LI); thyssenkrupp AG, 45143 Essen (DE)
(72) Erfinder: FEJES, Tamas, 3400 Mezokövesd (HU); GÉMESI, Roland, 2120 Dunakeszi (HU); VÉR, Ábel, 2083 Solymár (HU)
(74) Vertreter: thyssenkrupp Intellectual Property GmbH
(86) Internationale Anmeldenummer: PCT/EP2020/062963
(87) Internationale Veröffentlichungsnummer: WO 2020/229377

(56) Entgegenhaltungen:
- EP-A1- 2 113 742
- EP-A1- 2 180 296
- DE-A1- 19 520 299

## Beschreibung

Die Erfindung betrifft einen Rotorpositionssensor zur Bestimmung der Winkellage einer Rotorwelle eines Elektromotors nach dem Oberbegriff des Anspruchs 1 und ein Lenksystem für ein Kraftfahrzeug mit einem Rotorpositionssensor nach dem Oberbegriff des Anspruchs 9.

Bei Elektromotoren, insbesondere bei mehrphasigen bürstenlosen Gleichstrommotoren, erfolgt die Kommutierung vorzugsweise sensorgesteuert mittels eines Rotorpositionssensors, der die Winkellage der Rotorwelle des Elektromotors bestimmt. Bekannte Rotorpositionssensoren beruhen auf einem magnetischen Messprinzip: Ein Magnetfeld mindestens eines mit der Rotorwelle drehfest verbundenen Magneten wird durch einen Magnetfeldsensor, beispielsweise einen Hall-, AMR- oder GMR-Sensor detektiert und in Form eines Rotorpositionssignals ausgegeben. Insbesondere werden derartige Rotorpositionssensoren bei Elektromotoren von Kraftfahrzeug-Lenksystemen eingesetzt, die eine elektrische Hilfslenkkraft bereitstellen.

Um die Betriebssicherheit solcher Rotorpositionssensoren zu erhöhen, ist es aus EP 2 752 645 A2 bekannt, die Rotorposition redundant zu ermitteln und ein Fehlererkennungssystem vorzusehen, das geeignet ist, von den redundant ermittelten Rotorpositionssignalen fehlerhafte Signale zu verwerfen. Nachteilig ist, dass der Rotorpositionssensor trotz redundanter Ausführung aufgrund seines Messprinzips anfällig bleibt auf Störungen durch magnetische Streufelder, wie sie in Kraftfahrzeugen insbesondere durch stromführende Leitungen auftreten. Diese Problematik tritt aufgrund der zunehmenden Elektrifizierung von Kraftfahrzeugen, insbesondere der Leistungskomponenten im Antriebsstrang, verstärkt auf. Gleichzeitig steigen die Anforderungen an die Betriebssicherheit der Rotorpositionssensoren durch zunehmend autonom fahrende Fahrzeuge weiter an.

Aus dem Gebiet der Lenkwellensensoren ist beispielsweise aus DE 10 2009 027 191 A1 eine Vorrichtung zum Bestimmen eines Drehmomentes und/oder eines Drehwinkels einer Welle bekannt, die einen zur Welle konzentrischen Schaltungsträger, auf dem mindestens zwei stromdurchflossene Leiterbahnabschnitte angeordnet sind, und ein zur Welle konzentrisches und gegenüber dem Schaltungsträger verdrehbares Geberelement mit mindestens einem ersten Teilbereich aus elektrisch leitfähigem Material und mindestens einem Teilbereich aus elektrisch nicht leitfähigem Material aufweist. Bei Aufbringen eines Drehmomentes auf die Welle verdreht sich das Geberelement gegenüber dem Schaltungsträger, wodurch eine Veränderung der Induktivität der Leiterbahnabschnitte eintritt. Nachteilig ist, dass sich bei dem vorgeschlagenen Sensor der Messbereich reduziert, sobald redundante Messergebnisse erzeugt werden sollen, wodurch eine zusätzliche Indexfunktion erforderlich wird.

DE 195 20 299 A1 beschreibt eine Einrichtung zur Lageerkennung, die zwei getrennte Sensorsysteme umfasst, die jeweils die zu bestimmende Größe messen. Als wesentlich wird dabei angesehen, dass die beiden Sensorsysteme nach unterschiedlichen physikalischen Prinzipien arbeiten. Die Einrichtung kann aus einem optischen und einem Magnet-Hall-System bestehen. Anstelle des optischen Systems kann auch ein Magnetsystem eingesetzt werden, bei dem als Scheibe eine ferromagnetische Scheibe verwendet wird, die mit induktiven Aufnehmern abgetastet wird. Als Markierungen können dabei entweder Schlitze oder Zähne oder Bereiche aus anderem Material verwendet werden.

Es ist daher die Aufgabe der vorliegenden Erfindung, einen Rotorpositionssensor und ein Lenksystem für ein Kraftfahrzeug anzugeben, deren Funktions- und Betriebssicherheit bei kompakter und kostengünstiger Bauweise verbessert ist.

Diese Aufgabe wird gelöst durch einen Rotorpositionssensor mit den Merkmalen des Anspruchs 1 und ein Lenksystem für ein Kraftfahrzeug mit den Merkmalen des Anspruchs 9.

Hierdurch wird Rotorpositionssensor zur Bestimmung der Winkellage einer Rotorwelle eines Elektromotors geschaffen mit einem an der Rotorwelle endseitig befestigbaren Geberelement, das mindestens einen zentral angeordneten Gebermagneten aufweist, und mit mindestens einem dem Gebermagneten in Verlängerung der Motorwelle auf einem Schaltungsträger gegenüberliegend positionierbaren Magnetfeldsensor. Der Magnetfeldsensor ist dazu ausgebildet, ein erstes von der Winkellage des Geberelementes abhängiges Sensorsignal auszugeben. Auf dem Geberelement ist ferner zumindest ein in einer den Gebermagneten umschließenden Umfangsrichtung begrenzter elektrisch leitfähiger Bereich vorgesehen für eine induktive Zusammenwirkung mit einem auf dem Schaltungsträger angeordneten Spulensystem zur Erzeugung eines zweiten von der Winkellage des Geberelementes abhängigen Sensorsignals.

Der erfindungsgemäße Rotorpositionssensor ist mit einer diversitären Redundanz ausgestattet. Diese diversitäre Redundanz beruht auf der Kombination eines magnetischen und eines induktiven Messprinzips auf einem einzigen Geberelement zur Bestimmung der Rotorposition. Die beiden eingesetzten Messprinzipien zur Erzeugung des ersten und des zweiten Sensorsignales basieren auf unterschiedlichen Frequenzbereichen, so dass das Risiko einer Störung durch elektromagnetische Streufelder minimiert wird. Während der Magnetfeldsensor das Magnetfeld des sich mit der Motordrehzahl drehenden Gebermagneten detektiert, basiert das induktive Prinzip vorzugsweise auf von dem Spulensystem erzeugten Wechselfeldern im MHz-Bereich. Dadurch ist die Funktions- und Betriebssicherheit verbessert.

Vorteilhaft ist ferner die bauraumsparende Anordnung eines magnetischen und eines induktiven Gebers auf einem einzigen Geberelement, wobei die elektrisch leitfähigen Bereiche des induktiven Gebers zugleich eine Abschirmung für auf den Magnetfeldsensor wirkende Streufelder bereitstellen können. Zugleich ist die Auswerteelektronik für beide Messprinzipien auf einem einzigen Schaltungsträger angeordnet. Das Geberelement ist vorzugsweise scheibenförmig ausgebildet. Der zentrale Gebermagnet ist bevorzugt von in azimutaler Richtung regelmäßig beabstandeten elektrisch leitfähigen Bereichen umgeben. Der Gebermagnet ist vorzugsweise als diametral magnetisierter Scheibenmagnet ausgebildet.

Der Rotorpositionssensor kann ferner eine Auswerteeinheit zur Auswertung des ersten und des zweiten Sensorsignales umfassen, die dazu ausgebildet ist, eine Störfelderkennung durchzuführen und bei Abweichung eines der Sensorsignale von einem erwartbaren Signalverlauf, das jeweils andere Sensorsignal an einem Ausgang der Auswerteeinheit bereitzustellen. Die Fehlererkennung kann beispielsweise über die Auswertung einer Korrelation mit einem in der Auswerteeinheit abgespeicherten erwartbaren Signalverlauf erfolgen. Alternativ oder zusätzlich kann eine Mustererkennung zur Erkennung von erwartbaren Fehlersignaturen im Signalverlauf der Sensorsignale durchgeführt werden.

Vorzugsweise sind zumindest zwei in der Umfangsrichtung zueinander beabstandete, elektrisch leitfähige Bereiche vorgesehen und das Spulensystem sowie der Magnetfeldsensor weisen jeweils eine zumindest zweifache Redundanz auf zur Erzeugung von mindestens zwei ersten und zwei zweiten Sensorsignalen. Die Redundanz des Sensorsystems kann durch die doppelte zweifache Redundanz auf eine zumindest vierfache Redundanz erhöht werden, wie sie für die autonom fahrenden Fahrzeuge der Zukunft benötigt wird. Durch die insgesamt zumindest vier unabhängigen Messsignale können fehlerhafte Signale identifiziert und verworfen werden. Ein solcher Grad an Redundanz lässt sich bei Verwendung eines einzelnen Messprinzips nicht oder nur in wesentlich größer bauenden Sensoren verwirklichen.

Das Spulensystem umfasst mindestens eine Sendespule zur Erzeugung eines Wechselfeldes und mindestens eine Empfangsspule zur Detektion des durch den mindestens einen leitfähigen Bereich des Geberelements lokal beeinflussten Wechselfeldes. Durch die Verwendung eines Spulensystems mit Sende- und Empfangsspule wird ein induktives Messprinzip verwirklicht, dass wenig empfindlich ist für mechanische Toleranzen und Temperaturschwankungen.

Die Sendespule erzeugt dabei ein magnetisches Wechselfeld, das in der Empfangsspule eine Spannung induziert. Die induzierte Spannung hängt ab von der induktiven Kopplung zwischen Sende- und Empfangsspule, die durch den elektrisch leitfähigen Bereich am Geberelement beeinflusst wird. In dem elektrisch leitfähigen Bereich werden Wirbelströme induziert, die das Wechselfeld lokal schwächen. Auf diese Weise wird abhängig von einer Überlappung des leitfähigen Bereichs mit der Empfangsspule eine geringere Induktionsspannung in der Empfangsspule erzeugt. Alternativ kann statt oder zusätzlich zu der Induktionsspannung auch der in der Empfangsspule induzierte Strom gemessen werden.

Das Spulensystem kann eine Anzahl an Empfangsspulen aufweisen, die der Anzahl der leitfähigen Bereiche des Geberelements entspricht. Dadurch ist jedem leitfähigen Bereich des Geberelements momentan jeweils eine Empfangsspule zugeordnet, die die Position des jeweiligen Geberelements bestimmt.

Die Anzahl der Empfangsspulen kann jedoch auch von der Anzahl der leitfähigen Bereiche abweichen. Insbesondere kann eine höhere Anzahl von Empfangsspulen als von leitfähigen Bereichen vorgesehen sein. Dies bietet den Vorteil, dass die momentanen Sensorsignale der Empfangsspulen sich unterscheiden und deren Kombination die momentane Winkellage eindeutig kodiert. Ferner wird die Winkelauflösung des Sensors verbessert.

Die leitfähigen Bereiche können sich in ihrer Leitfähigkeit und/oder Permeabilität voneinander unterscheiden. Dadurch können die einzelnen Bereiche unterschiedlich starke Sensorsignale in Zusammenwirkung mit dem Spulensystem erzeugen. Es ist auf diese Weise möglich, einen Messbereich von 360° bei der redundanten induktiven Messung zu erreichen.

Bevorzugt sind mindestens zwei Empfangsspulen unter Ausbildung einer Drehsymmetrie auf dem Schaltungsträger angeordnet.

Die Empfangsspulen haben mindestens eine Windung, die den Magnetfeldsensor exzentrisch umschließt. Durch die Anordnung des Magnetfeldsensors innerhalb der Windungsfläche der Empfangsspulen wird der Einfluss des sich drehenden Gebermagneten auf die in den Empfangsspulen induzierte Spannung reduziert. Bei einem sich innerhalb der Windungsfläche einer Spule drehenden Magneten ändert sich der durch die Fläche tretende magnetische Fluss kaum, so dass der Einfluss auf die induzierte Spannung verringert ist.

Die Sendespule ist vorzugsweise zentralsymmetrisch um den Magnetfeldsensor ausgebildet. Auf diese Weise wird ein zur Motorwelle achsensymmetrisches Wechselfeld erzeugt, das unabhängig von der azimutalen Anordnung der Empfangsspulen die gleiche induktive Kopplung erlaubt. Denkbar sind aber auch Spulensysteme mit mehreren Sendespulen. Beispielsweise kann jeder Empfangsspule eine Sendespule zugeordnet sein, die vorzugsweise deckungsgleich zueinander ausgebildet sind.

In einigen Ausführungsformen kann das zweite Sensorsignal erzeugbar sein durch Erfassung von Induktivitäten von Spulen des Spulensystems in Abhängigkeit von der Winkellage des Geberelementes. Dabei können beispielsweise Selbstinduktivitäten von mit den elektrisch leitfähigen Bereichen überlappenden Spulen oder Gegeninduktivitäten zwischen Sende- und Empfangsspulen gemessen werden.

Die leitfähigen Bereiche können aus einem weichmagnetischen Material hergestellt sein. Dadurch wird die magnetische Abschirmung des zentral angeordneten Magnetfeldsensors und damit die Unempfindlichkeit des Sensors gegenüber Störeinflüssen weiter verbessert.

Die Aufgabe wird ferner gelöst durch ein Lenksystem für ein Kraftfahrzeug umfassend eine Lenkhandhabe für die Eingabe eines Fahrerlenkwunsches, einen Elektromotor, dessen Rotorwelle in Wirkverbindung mit mindestens einem gelenkten Rad des Kraftfahrzeugs steht zur Beaufschlagung des gelenkten Rades mit einem Lenkmoment in Abhängigkeit von dem Fahrerlenkwunsch, und einem an der Rotorwelle angeordneten Rotorpositionssensor gemäß der vorstehenden Beschreibung.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
- Fig. 1: zeigt schematisch ein Ausführungsbeispiel eines Lenksystems mit einem erfindungsgemäßen Rotorpositionssensor,
- Fig. 2: zeigt schematisch den Aufbau Rotorpositionssensors gemäß dem Ausführungsbeispiel nach Fig. 1,
- Fig. 3: zeigt schematisch den Aufbau des Schaltungsträgers des Rotorpositionssensors gemäß dem Ausführungsbeispiel nach Fig. 1 und 2,
- Fig. 4: zeigt schematisch den Aufbau des Geberelementes des Rotorpositionssensors gemäß dem Ausführungsbeispiel nach Fig. 1 und 2.

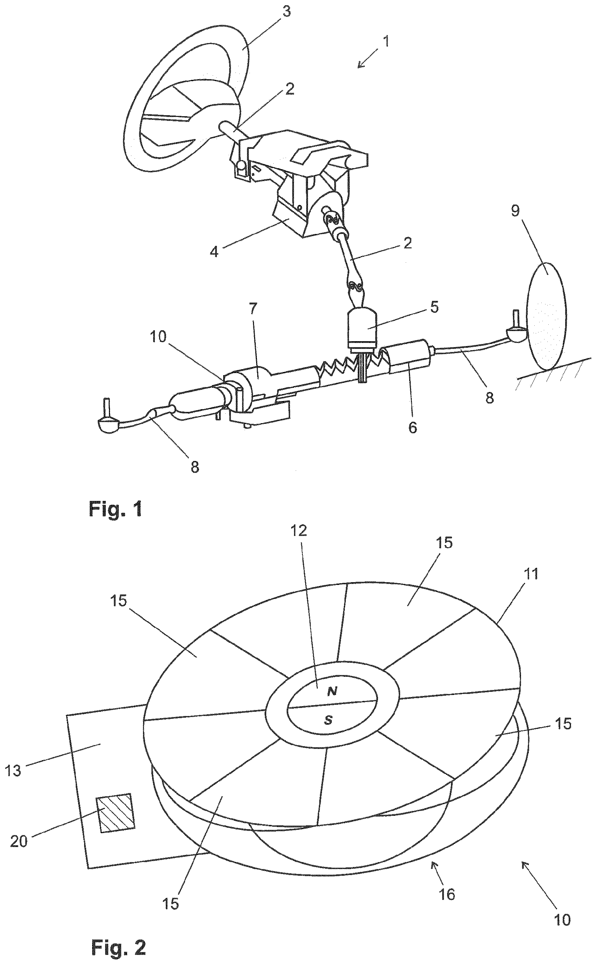

In **Fig. 1** ist schematisch der Aufbau eines Lenksystems 1 für ein Kraftfahrzeug gemäß einem Ausführungsbeispiel der Erfindung dargestellt. Das in Fig. 1 gezeigte Lenksystem 1 ist als elektromechanische Kraftfahrzeugservolenkung ausgebildet. Der erfindungsgemäße Rotorpositionssensor ist jedoch auch in beliebigen anderen Lenksystemen mit einem elektrisch erzeugten Lenkmoment einsetzbar, insbesondere in Steer-by-Wire Lenksystemen, beispielsweise mit Zahnstangen- oder Einzelradlenkung.

Das Lenksystem 1 umfasst ein an einer Lenkwelle 2 befestigtes Lenkrad als Lenkhandhabe 3 für die Eingabe eines Fahrerlenkwunsches, einen Elektromotor 7, dessen Rotorwelle in Wirkverbindung mit zwei gelenkten Rädern 9 des Kraftfahrzeugs steht (in Fig. 1 ist nur ein gelenktes Rad 9 ist gezeigt) zur Beaufschlagung der gelenkten Räder 9 mit einem Lenkmoment in Abhängigkeit von dem Fahrerlenkwunsch, und einem an der Rotorwelle des Elektromotors 7 angeordneten Rotorpositionssensor 10. Der Fahrerlenkwunsch kann über einen an der Lenkwelle 2 angeordneten Lenkwellensensor 4 erfasst, in einem Steuergerät (nicht dargestellt), ggf. zusammen mit anderen Eingangsgrößen, elektronisch verarbeitet und dem Elektromotor 7 zugeführt werden.

In der gezeigten elektromechanischen Kraftfahrzeugservolenkung wird der Fahrerlenkwunsch zusätzlich mechanisch über die Lenkwelle 2 und ein Lenkgetriebe 5 auf eine Zahnstange 6 übertragen, deren Verschiebung über Spurstangen 8 auf die gelenkten Räder 9 übertragen wird. Der Elektromotor 7 bringt ein Hilfslenkmoment in die Zahnstange 6 ein. Alternativ kann der Elektromotor 7 auch im Bereich der Lenkwelle 2 angeordnet sein und das Hilfslenkmoment in die Lenkwelle 2 einbringen.

Fig. 2 zeigt eine Detaildarstellung des Rotorpositionssensors 10 gemäß Fig. 1. Der Rotorpositionssensor 10 dient zur Bestimmung der Winkellage der Rotorwelle des Elektromotors 7. Dazu ist das Geberelement 11 an der Rotorwelle endseitig befestigt. Das Geberelement 11 ist in diesem Ausführungsbeispiel kreisscheibenförmig ausgebildet und wird vorzugsweise in seinem Mittelpunkt an der Rotorwelle befestigt. Die Befestigung an der Motorwelle ist auf einer dem Schaltungsträger 13 abgewandten Seite des Geberelementes 11 vorgesehen.

Das Geberelement 11 weist einen zentral angeordneten Gebermagneten 12 auf. Der Gebermagnet 12 ist bevorzugt ein diametral magnetisierter Scheibenmagnet.

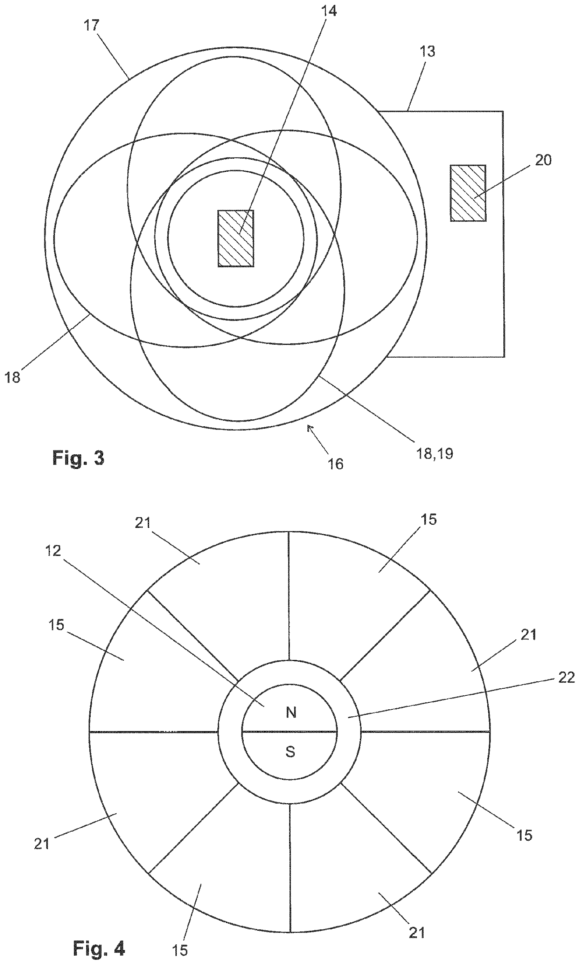

Der Rotorpositionssensor 10 weist ferner einen dem Gebermagneten 12 in Verlängerung der Motorwelle auf einem Schaltungsträger 13 gegenüberliegend positionierten Magnetfeldsensor 14 (vgl. Fig. 3) auf, der dazu ausgebildet ist, ein erstes von der Winkellage des Geberelementes 11 abhängiges Sensorsignal auszugeben. Zur Auswertung und Verarbeitung der Sensorsignale ist auf dem Schaltungsträger ferner eine Auswerteeinheit 20 angeordnet.

Der Magnetfeldsensor kann als Hallelement ausgebildet sein. Bevorzugt wird jedoch magnetoresistiver Sensor, beispielsweise ein AMR- oder GMR-Element verwendet. Der Magnetfeldsensor 14 ist bevorzugt dazu ausgebildet, die Richtung und die Orientierung des von dem Gebermagneten 12 erzeugten Magnetfeldes zu bestimmen.

Auf dem Geberelement 11 ist ferner zumindest ein in einer den Gebermagneten 12 umschließenden Umfangsrichtung begrenzter elektrisch leitfähiger Bereich 15 vorgesehen für eine induktive Zusammenwirkung mit einem auf dem Schaltungsträger 13 angeordneten Spulensystem 16 zur Erzeugung eines zweiten von der Winkellage des Geberelementes 11 abhängigen Sensorsignals. Die Ansteuerung des Spulensystems 16 zur Erzeugung des zweiten Sensorsignals kann durch die Auswerteeinheit 20 erfolgen. Beispielsweise kann das Spulensystem 16 mit einem oder mehreren in der Auswerteeinheit 20 angeordneten Schwingkreisen zusammenwirken.

In dem dargestellten Ausführungsbeispiel weist das Geberelement 11 eine Mehrzahl kongruenter leitfähiger Bereiche 15 auf, die in der Umfangsrichtung regelmäßig zueinander beabstandet sind. Insbesondere können vier elektrisch leitfähige Bereiche 15 vorgesehen sein.

Vorzugsweise sind zumindest zwei in der Umfangsrichtung zueinander beabstandete, elektrisch leitfähige Bereiche 15 vorgesehen und das Spulensystem 16 und der Magnetfeldsensor 14 weisen jeweils zumindest eine zweifache Redundanz auf zur Erzeugung von mindestens zwei ersten und zwei zweiten Sensorsignalen. Dafür weist der Magnetfeldsensor 14 bevorzugt mindestens zwei unabhängig messende Sensorkerne auf und das Spulensystem 16 enthält mindestens zwei unabhängig ansteuerbare Spulen. Durch die kombinierte Verwendung von induktiven und magnetischen Messprinzipien kann der Rotorpositionssensor die verschiedenen äußeren Störfelder ausschließen.

In Fig. 3 ist der Schaltungsträger 13 des Rotorpositionssensors 10 gemäß Fig. 1 und 2 gezeigt, auf dem das Spulensystem 16, der Magnetfeldsensor 14 und die Auswerteeinheit 20 angeordnet sind. Das Spulensystem 16 weist eine Sendespule 17 zur Erzeugung eines Wechselfeldes und eine Mehrzahl von Empfangsspulen 18 zur Detektion des durch den mindestens einen leitfähigen Bereich 15 des Geberelements 11 (vgl. Fig. 2) lokal beeinflussten Wechselfeldes auf.

Die Sendespule 17 ist bevorzugt zentralsymmetrisch, beispielsweise kreisförmig, um den Magnetfeldsensor 14 ausgebildet. Die Sendespule 17 kann in einem äußeren Randbereich des Schaltungsträgers 13 angeordnet sein, um den erforderlichen Bauraum des Rotorpositionssensors 10 zu optimieren.

Das Spulensystem 16 weist vorzugsweise eine Anzahl an Empfangsspulen 18 auf, die der Anzahl der leitfähigen Bereiche 15 des Geberelements 11 entspricht. In dem dargestellten Ausführungsbeispiel ist die Anzahl der Empfangsspulen 18 und der elektrisch leitfähigen Bereiche 15 gleich vier.

Die Empfangsspulen 18 sind unter Ausbildung einer Drehsymmetrie auf dem Schaltungsträger 13 angeordnet und weisen eine oder mehrere geschlossene Windungen 19 auf, die den Magnetfeldsensor 14 exzentrisch umschließen. Die den Magnetfeldsensor 14 umschließenden Windungen 19 der Empfangsspulen 18 tragen zur elektromagnetischen Abschirmung des Magnetfeldsensors 14 bei.

Das zweite Sensorsignal ist beispielsweise erzeugbar durch Erfassung von Induktivitäten der Spulen 17, 18 des Spulensystems 16 in Abhängigkeit von der Winkellage des Geberelementes 11. Insbesondere kann als Maß für die Gegeninduktivität von Sendespule 17 und einer der Empfangsspulen 18, die in dieser Empfangsspule 18 induzierte Spannung gemessen werden. Alternativ oder zusätzlich kann das Spulensystem 18 auch die Selbstinduktivität von einzelnen Spulen messen, beispielsweise durch Überwachung der Frequenz einer in dieser Spule angeregten Schwingung.

In **Fig. 4** ist das Geberelement 11 des Rotorpositionssensors 10 gemäß Fig. 1 und 2 in einer Draufsicht dargestellt. Wie bereits ausgeführt weist das Geberelement 11 einen zentralen, diametral magnetisierten Gebermagneten 12, um den herum azimutal zueinander beabstandete elektrisch leitfähige Bereiche 15 angeordnet sind. Die elektrisch leitfähigen Bereiche 15 sind vorzugsweise durch elektrisch nicht leitfähige Bereiche 21 voneinander beabstandet. Die elektrisch nicht leitfähigen Bereiche 21 können auch als Aussparungen einer elektrisch leitfähigen Platte ausgebildet sein. Die elektrisch leitfähigen Bereiche 15 sind bevorzugt kreisringsegmentförmig ausgebildet.

Der Gebermagnet 12 als magnetischer Geber ist mit den elektrisch leitfähigen Bereichen 15 als induktivem Geber über einen Verbindungsabschnitt 22 drehfest verbunden. Das Verbindungsabschnitt 22 kann ebenfalls, teilweise oder vollständig, aus einem elektrisch leitfähigen Material hergestellt sein.

Die leitfähigen Bereiche 15 sind vorzugsweise aus einem weichmagnetischen Material hergestellt, um die magnetische Abschirmung des Magnetfeldsensors 14 gegenüber Störfeldern zu erhöhen. Der Verbindungsabschnitt 22 kann ebenfalls aus einem weichmagnetischen Material hergestellt sein. Die elektrische leitfähigen Bereiche 15 und/oder der Verbindungsabschnitt 22 können auch aus einem para- oder diamagnetischen Material hergestellt sein.

### Bezugszeichenliste

- 1: Lenksystem
- 2: obere Lenkwelle
- 3: Lenkhandhabe
- 4: Lenkwellensensor
- 5: Lenkgetriebe
- 6: Zahnstange
- 7: Elektromotor
- 8: Spurstange
- 9: gelenktes Rad
- 10: Rotorpositionssensor
- 11: Geberelement
- 12: Gebermagnet
- 13: Schaltungsträger
- 14: Magnetfeldsensor
- 15: leitfähiger Bereich
- 16: Spulensystem
- 17: Sendespule
- 18: Empfangsspule
- 19: Windung
- 20: Auswerteeinheit
- 21: nicht leitfähiger Bereich
- 22: Verbindungsabschnitt

## Patentansprüche

1. Rotorpositionssensor zur Bestimmung der Winkellage einer Rotorwelle eines Elektromotors (7) mit einem an der Rotorwelle endseitig befestigbaren Geberelement (11), das mindestens einen zentral angeordneten Gebermagneten (12) aufweist, und mit mindestens einem dem Gebermagneten (12) in Verlängerung der Motorwelle auf einem Schaltungsträger (13) gegenüberliegend positionierbaren Magnetfeldsensor (14), der dazu ausgebildet ist, ein erstes von der Winkellage des Geberelementes (11) abhängiges Sensorsignal auszugeben, wobei auf dem Geberelement (11) zumindest ein in einer den Gebermagneten (12) umschließenden Umfangsrichtung begrenzter elektrisch leitfähiger Bereich (15) vorgesehen ist für eine induktive Zusammenwirkung mit einem auf dem Schaltungsträger (13) angeordneten Spulensystem (16) zur Erzeugung eines zweiten von der Winkellage des Geberelementes (11) abhängigen Sensorsignals **dadurch gekennzeichnet, dass** das Spulensystem (16) mindestens eine Sendespule (17) zur Erzeugung eines Wechselfeldes und mindestens eine Empfangsspule (18) zur Detektion des durch den mindestens einen leitfähigen Bereich (15) des Geberelements (11) lokal beeinflussten Wechselfeldes umfasst und die Empfangsspule (18) mindestens eine Windung (19) aufweist, die den Magnetfeldsensor (14) exzentrisch umschließt.

2. Rotorpositionssensor nach Anspruch 1, **dadurch gekennzeichnet, dass** der Rotorpositionssensor (1) eine Auswerteeinheit (20) zur Auswertung des ersten und des zweiten Sensorsignales umfasst, die dazu ausgebildet ist, eine Störfelderkennung durchzuführen und bei Abweichung eines der Sensorsignale von einem erwartbaren Signalverlauf, das jeweils andere Sensorsignal an einem Ausgang der Auswerteeinheit (20) bereitzustellen.

3. Rotorpositionssensor nach Anspruch 1 oder 2, **dadurch gekennzeichnet, dass** zumindest zwei in der Umfangsrichtung zueinander beabstandete, elektrisch leitfähige Bereiche (15) vorgesehen sind und das Spulensystem (16) und der Magnetfeldsensor (14) jeweils zumindest eine zweifache Redundanz aufweisen zur Erzeugung von mindestens zwei ersten und zwei zweiten Sensorsignalen.

4. Rotorpositionssensor nach einem der Ansprüche 1 bis 3, **dadurch gekennzeichnet, dass** das Spulensystem (16) eine Anzahl an Empfangsspulen (18) aufweist, die der Anzahl der leitfähigen Bereiche (15) des Geberelements (11) entspricht.

5. Rotorpositionssensor nach einem der Ansprüche 1 bis 4, **dadurch gekennzeichnet, dass** mindestens zwei Empfangsspulen (18) unter Ausbildung einer Drehsymmetrie auf dem Schaltungsträger (13) angeordnet sind.

6. Rotorpositionssensor nach einem der Ansprüche 1 bis 5, **dadurch gekennzeichnet, dass** die Sendespule (17) zentralsymmetrisch um den Magnetfeldsensor (14) ausgebildet ist.

7. Rotorpositionssensor nach einem der Ansprüche 1 bis 6, **dadurch gekennzeichnet, dass** das zweite Sensorsignal erzeugbar ist durch Erfassung von Induktivitäten von Spulen (17, 18) des Spulensystems (16) in Abhängigkeit von der Winkellage des Geberelementes (11).

8. Rotorpositionssensor nach einem der Ansprüche 1 bis 6, **dadurch gekennzeichnet, dass** die leitfähigen Bereiche (15) aus einem weichmagnetischen Material hergestellt sind.

9. Lenksystem für ein Kraftfahrzeug umfassend eine Lenkhandhabe (3) für die Eingabe eines Fahrerlenkwunsches, einen Elektromotor (7), dessen Rotorwelle in Wirkverbindung mit mindestens einem gelenkten Rad (9) des Kraftfahrzeugs steht zur Beaufschlagung des gelenkten Rades (9) mit einem Lenkmoment in Abhängigkeit von dem Fahrerlenkwunsch, und einem an der Rotorwelle angeordneten Rotorpositionssensor (10) **dadurch gekennzeichnet, dass** der Rotorpositionssensor (10) nach einem der Ansprüche 1 bis 8 ausgebildet ist.

## Claims

1. Rotor position sensor for determining the angular position of a rotor shaft of an electric motor (7), with an encoder element (11), which can be fastened to an end of the rotor shaft and has at least one centrally arranged encoder magnet (12), and with at least one magnetic field sensor (14), which can be positioned opposite the encoder magnet (12) in extension of the motor shaft on a circuit carrier (13) and is designed to output a first sensor signal dependent on the angular position of the encoder element (11), wherein at least one electrically conductive region (15), which is delimited in a circumferential direction extending around the encoder magnet (12), is provided on the encoder element (11) for inductively interacting with a coil system (16) arranged on the circuit carrier (13) for generating a second sensor signal dependent on the angular position of the encoder element (11), **characterized in that** the coil system (16) comprises at least one transmitting coil (17) for generating an alternating field and at least one receiving coil (18) for detecting the alternating field locally influenced by the at least one conductive region (15) of the encoder element (11), and the receiving coil (18) has at least one turn (19), which eccentrically encloses the magnetic field sensor (14).

2. Rotor position sensor according to Claim 1, **characterized in that** the rotor position sensor (1) comprises an evaluation unit (20) for evaluating the first and second sensor signals, which is designed to carry out an interference field detection and, if there is a deviation of one of the sensor signals from a likely signal profile, to provide the other sensor signal, respectively, at an output of the evaluation unit (20).

3. Rotor position sensor according to Claim 1 or 2, **characterized in that** at least two electrically conductive regions (15) spaced apart from one another in the circumferential direction are provided and the coil system (16) and the magnetic field sensor (14) each have at least a double redundancy for generating at least two first and two second sensor signals.

4. Rotor position sensor according to one of Claims 1 to 3, **characterized in that** the coil system (16) has a number of receiving coils (18) that corresponds to the number of conductive regions (15) of the encoder element (11).

5. Rotor position sensor according to one of Claims 1 to 4, **characterized in that** at least two receiving coils (18) are arranged to form a rotational symmetry on the circuit carrier (13).

6. Rotor position sensor according to one of Claims 1 to 5, **characterized in that** the transmitting coil (17) is formed centrally symmetrically around the magnetic field sensor (14).

7. Rotor position sensor according to one of Claims 1 to 6, **characterized in that** the second sensor signal can be generated by sensing inductances of coils (17, 18) of the coil system (16) in dependence on the angular position of the encoder element (11).

8. Rotor position sensor according to one of Claims 1 to 6, **characterized in that** the conductive regions (15) are produced from a soft-magnetic material.

9. Steering system for a motor vehicle comprising a steering handling device (3) for the input of a driver's steering request, an electric motor (7), the rotor shaft of which is in operative connection with at least one steered wheel (9) of the motor vehicle for subjecting the steered wheel (9) to a steering torque in dependence on the driver's steering request, and a rotor position sensor (10) arranged on the rotor shaft, **characterized in that** the rotor position sensor (10) is formed according to one of Claims 1 to 8.

## Revendications

1. Capteur de position de rotor destiné à déterminer la position angulaire d'un arbre de rotor d'un moteur électrique (7), ledit capteur de position de rotor comprenant un élément de capteur (11), qui peut être fixé à l'extrémité de l'arbre de rotor et qui comporte au moins un aimant émetteur (12) disposé au centre, et au moins un capteur de champ magnétique (14) qui peut être positionné en face de l'aimant émetteur (12) dans le prolongement de l'arbre de moteur (14) sur un support de circuit (13) et qui est conçu pour délivrer un premier signal de capteur dépendant de la position angulaire de l'élément émetteur (11), au moins une zone électriquement conductrice (15) qui est délimitée dans une direction circonférentielle entourant l'aimant émetteur (12) étant prévue sur l'élément émetteur (11) pour coopérer de manière inductive avec un système de bobines (16) disposé sur le support de circuit (13) pour générer un deuxième signal de capteur dépendant de la position angulaire de l'élément émetteur (11), **caractérisé en ce que** le système de bobines (16) comporte au moins une bobine d'émission (17) destinée à générer un champ alternatif et au moins une bobine de réception (18) destinée à détecter le champ alternatif influencé localement par l'au moins une zone conductrice (15) de l'élément émetteur (11) et la bobine de réception (18) comporte au moins un enroulement (19) qui enferme le capteur de champ magnétique (14) de manière excentrique.

2. Capteur de position de rotor selon la revendication 1, **caractérisé en ce que** le capteur de position de rotor (1) comprend une unité d'évaluation (20) qui est destinée à évaluer les premier et deuxième signaux de capteur et qui est conçue pour effectuer une détection de champ d'interférence et, si l'un des signaux de capteur s'écarte d'une courbe de signal attendue, pour fournir l'autre signal de capteur respectif à une sortie de l'unité d'évaluation (20).

3. Capteur de position de rotor selon la revendication 1 ou 2, **caractérisé en ce qu'**il est prévu au moins deux régions électriquement conductrices (15) espacées l'une de l'autre dans la direction circonférentielle et le système de bobines (16) et le capteur de champ magnétique (14) ont chacun au moins une double redondance pour générer au moins deux premiers et deux seconds signaux de capteur.

4. Capteur de position de rotor selon l'une des revendications 1 à 3, **caractérisé en ce que** le système de bobines (16) comporte un nombre de bobines réceptrices (18) qui correspond au nombre de zones conductrices (15) de l'élément émetteur (11).

5. Capteur de position de rotor selon l'une des revendications 1 à 4, **caractérisé en ce qu'**au moins deux bobines de réception (18) sont disposées de manière à former une symétrie de rotation sur le support de circuit (13).

6. Capteur de position de rotor selon l'une des revendications 1 à 5, **caractérisé en ce que** la bobine d'émission (17) est formée de manière centralement symétrique autour du capteur de champ magnétique (14).

7. Capteur de position de rotor selon l'une des revendications 1 à 6, **caractérisé en ce que** le deuxième signal de capteur peut être généré par détection d'inductances de bobines (17, 18) du système de bobines (16) en fonction de la position angulaire de l'élément émetteur (11).

8. Capteur de position de rotor selon l'une des revendications 1 à 6, **caractérisé en ce que** les zones conductrices (15) sont réalisées à partir d'un matériau magnétique doux.

9. Système de direction d'un véhicule automobile comprenant une manette de direction (3) destinée à saisir une demande de direction de la part du conducteur, un moteur électrique (7) dont l'arbre de rotor est fonctionnellement relié à au moins une roue dirigée (9) du véhicule automobile pour appliquer un couple de direction à la roue dirigée (9) en fonction de la demande de braquage de la part du conducteur, et un capteur de position de rotor (10) disposé sur l'arbre de rotor, **caractérisé en ce que** le capteur de position de rotor (10) est conçu selon l'une des revendications 1 à 8.
